(19)

Europäisches Patentamt

European Patent Office

Office européen des brevets

(11) **EP 4 236 117 B1**

(12) **EUROPEAN PATENT SPECIFICATION**

(45) Date of publication and mention
of the grant of the patent:
**12.02.2025   Bulletin 2025/07**

(21) Application number: **22305221.8**

(22) Date of filing: **28.02.2022**

(51) International Patent Classification (IPC):
**H04B 17/345** (2015.01)

(52) Cooperative Patent Classification (CPC):
**H04B 17/345**

(54) **IMPROVED CHARACTERIZATION OF A RADIOFREQUENCY ENVIRONMENT COMPRISING A PLURALITY OF INTERFERENCE SOURCES**

VERBESSERTE CHARAKTERISIERUNG EINER HOCHFREQUENZUMGEBUNG, DIE EINE MEHRZAHL VON STÖRQUELLEN UMFASST

CARACTÉRISATION AMÉLIORÉE D'UN ENVIRONNEMENT DE RADIOFRÉQUENCE COMPRENANT UNE PLURALITÉ DE SOURCES D'INTERFÉRENCE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**30.08.2023   Bulletin 2023/35**

(73) Proprietors:
• **Mitsubishi Electric R&D Centre Europe B.V.**
**1119 NS  Schiphol Rijk Amsterdam (NL)**
Designated Contracting States:
**FR**
• **MITSUBISHI ELECTRIC CORPORATION**
**Chiyoda-ku**
**Tokyo 100-8310 (JP)**
Designated Contracting States:
**AL AT BE BG CH CY CZ DE DK EE ES FI GB GR HR HU IE IS IT LI LT LU LV MC MK MT NL NO PL PT RO RS SE SI SK SM TR**

(72) Inventors:
• **NGUYEN, Viet Hoa**
**35708 RENNES CEDEX 7 (FR)**
• **GRESSET, Nicolas**
**35708 RENNES CEDEX 7 (FR)**

(74) Representative: **Plasseraud IP**
**104 Rue de Richelieu**
**CS92104**
**75080 Paris Cedex 02 (FR)**

(56) References cited:
**US-A1- 2012 045 012     US-A1- 2021 384 994**

**Description**

The present disclosure is in the context of monitoring a radio environment.

As many wireless communication systems nowadays operate in a public band, one must cope with the coexistence of interference. The characterization of interference helps monitoring the radio environment and/or managing the radio resource. In particular, it is sought for characterization of wireless interference.

Interference monitoring in a radio environment where multiple interference sources exist requires usually an analysis of observation obtained from several devices. The problem is rather more complex when the sources move during the observations. The problem is usually to identify the interference as separated sources and to characterize then the following properties for each source:

- Operating frequency band,
- Geolocation,
- Activation rate.

Prior art documents D1: US2012/045012 and D2: US2021384994 relates respectively to a method and a device for transmitting data in a wireless communication network and to systems and methods for identifying a source of a radiofrequency interference in a wireless network.

The present disclosure aims to improve the situation.

To that end, it proposes a method for characterizing radiofrequency interference caused by a plurality of sources, comprising:

- using at least one observing device scanning successively a plurality of radiofrequency bands for performing interference measurements in said plurality of radiofrequency bands, in different space locations, and at different time instants, and providing observations at successive time instants of:

  * a current observing frequency,

  * a current position of the observing device, and

  * a received interference power in an observed frequency band,

- computing, for each interference source and each observation, a likelihood probability to attribute one observation to one interference source,

- using said likelihood probability computations to assign each of said observations to one interference source,

- for each interference source assigned with one of said observations, estimating a location and a frequency occupation of said interference source,

More particularly, the aforesaid likelihood probability computing is based on both frequency observation and interference power observation.

It is proposed therefore to use both the frequency observations and, here in particular, the power observations to compute the likelihood probabilities, the power observations being related to the distance between the interference source and the observing device.

For example, the likelihood probability computing can involve a joint Bayesian inference of frequency observation and interference power observation. Alternatively, an Euclidean distance calculation approach can be used also.

In an embodiment, a database storing previous detections can be used. Typically, in an embodiment, the aforesaid likelihood probability computing can use such a database storing, for each source of said interference sources, at least data of the estimated location of said interference source and data of an occupation of at least two radiofrequency bands by said interference source.

Typically, these stored data can be derived from previous observations. Therefore, said data of a location of the interference source can be a data of a past location of the source, and said data of an occupation of the interference source can be typically a data of a past frequency occupation by said source.

The aforesaid database can be updated after each assignation of an observation to one interference source, in view of a next iteration of the method.

Therefore, the use of the database storing data of previous identifications of interferers (location/frequency band(s) of interference) can facilitate a current determination of multiple sources of interference. Reversely, after a determination of interferers, the content of the database is preferably updated so that it can be used efficiently for a next future iteration of the method.

In a particular embodiment, for each interference source, the database can provide at least one of:

- an average past position, and

- a probability map of a discretized past position.

Therefore, the database can provide an average past position of a source, and more particularly this average can be weighted inversely as a function of at the date of determination of this source.

The average past position can be used in a context of a "hard decision" embodiment which is specified below, and the probability map can be used in a context of a "source sampling" embodiment explained below also, depending for example on a level of confidence of a current determination of a source of interference.

Moreover, for each interference source, the database can provide at least one of:

- an average radiofrequency band past occupation, and

- probability map of radiofrequency range past occupation.

The database can store, for each interference source, data of occurrences of previous observations which were already assigned to this interference source.

This information of previous observations associated to a source can help also for probability calculations of a current observation to be associated (or not) to this same source.

For a current observation, the likelihood probability of one of the interference sources to be related to said current observation is computed on the basis of a comparison between data of said database and data of said given observation, and the aforesaid comparison comprises a determination of:

- a similarity degree between a level of radiofrequency power measured in the current observation and a closest level of radiofrequency power corresponding to a source, given by a past position of this source in said database relatively to the current position of the observing device; and

- and a similarity degree between a radiofrequency band which is occupied in the current observation and a radiofrequency band which was occupied by a source according to said database.

Therefore, the likelihood probability is computed on the basis of two items which can finally correspond to one same source:

- The current position of this source relatively to the observing device, which is given by the radiofrequency power of the signal received and measured by the observing device, and
- The frequency band(s) where such a source is active.

In the aforesaid "hard decision" embodiment, the assignation of at least one observation to one interference source can comprise:

- sorting the likelihood probabilities computed for each interference source to attribute said at least one observation to said interference source,

- selecting the highest computed likelihood probability to assign said at least one observation to the interference source having the highest computed likelihood probability.

In this embodiment, the likelihood probabilities can be computed for example on the basis of Euclidian distance calculations of:

- a distance between the observing device and a source, in a radiofrequency power domain (linked therefore to the space domain typically), and

- a distance between a frequency band occupied by said source according to the database, and a frequency band where interference is measured according to said observation.

In the "source sampling" embodiment, the assignation of at least one observation to one interference source comprises:

- sampling each source assignation based on a related computed likelihood probability, with an initial random draw followed by calculation iterations until successive samples converge to said related computed likelihood probability.

For example, in view to choose the "hard decision" embodiment or the "source sampling" embodiment, each likelihood probability can be compared to a threshold and:

- if the computed likelihood probability is above said threshold, then the highest computed likelihood probability is selected to assign said at least one observation to the interference source having the highest computed likelihood probability (hard decision embodiment),

- if the computed likelihood probability is above said threshold, then the source assignation is sampled until convergence (source sampling embodiment).

Regarding the observing device, in an embodiment, the observing device can move in successive known positions while said interference sources are assumed to be in fixed positions.

For example, the observing device can be installed in a moving vehicle, such as a train, having a known trajectory, or can simply be equipped with a GPS to know its successive current positions.

Alternatively, the aforesaid scanning of plurality of radiofrequency bands can be performed by at least three observing devices having known spatial positions (fixed positions for example), said spatial positions being not aligned, and the sources positions determination can be performed by triangulation over the three observing devices.

The present disclosure can also aim at an observing device comprising a computer circuit to perform at least steps of the method as presented above and including typically:

- receiving observations at successive time instants,

- computing (S1), for each interference source and each observation, a likelihood probability to attribute one observation to one interference source,

- using said likelihood probability computations to assign (S2) each of said observations to one interference source, and

- for each interference source assigned with one of said observations, estimating a location and a frequency occupation of said interference source.

It also aims at a system comprising at least three of these observing devices for performing the sources positions determination of the method by triangulation.

It also aims at a computer program comprising instructions which, when the program is executed by a computer, cause the computer to carry out at least steps of the method, including typically:

- receiving observations at successive time instants,

- computing (S1), for each interference source and each observation, a likelihood probability to attribute one observation to one interference source,

- using said likelihood probability computations to assign (S2) each of said observations to one interference source, and

- for each interference source assigned with one of said observations, estimating a location and a frequency occupation of said interference source.

It also aims at a non-transitory computer storage medium, storing instructions code of such a computer program.

More details and advantages of the present disclosure will be understood when reading the following description of embodiments given below as examples, and will appear from the related drawings where:

- Figure 1 shows the main steps of the analysis processing of interference,
- Figures 2a and 2b show the setting of a moving observing device: a) in spatial domain, and b) in frequency domain,
- Figures 3a and 3b show the setting of a plurality of observing devices: a) in spatial domain, and b) in frequency domain,

- Figure 4a shows the interference activity in the frequency domain of interference sources and Figure 4b shows their true respective positions in spatial domain,
- Figures 5a and 5b show the observation on a moving device respectively in the frequency domain via frequency hopping and in spatial domain via received power measurements,
- Figures 6a to 6d show the result of the implementation of the method with a moving device and with five interference sources active in different channels (five different colours or grey levels in figure 6a), active during different time periods (figure 6b), relatively to different positions of the moving device (figure 6c), and having respective positions finally determined in figure 6d.
- Figure 7 shows an interference analysis device for performing the method described above.

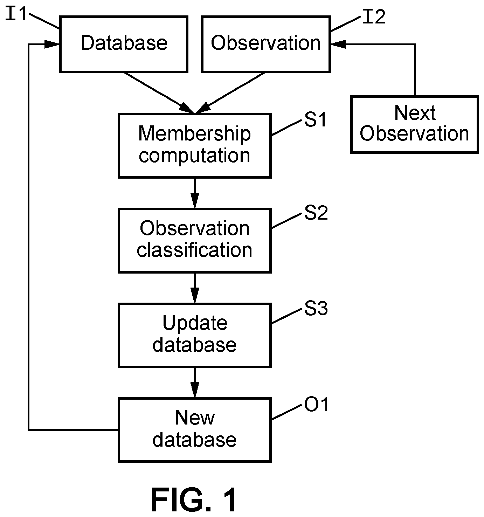

Referring to figure 1, given current observations I2 (mandatory) and an optional database I1 (the database can be built in prior steps of the method from precedent observations) of an environment comprising interferers for a communication system, the method proposes to analyse the interference in terms of frequency usage, geolocation characteristic and/or time usage. An interference analysis device performs observations in multiple frequencies, locations, and time instants.

The first input for each processing step is the interference database. For each separated current interference source, the database provides in step I1 the following information:

- Position information, being either:

  o The average position in considered space, or
  o A probability map of a discretized position of considered space,

- Frequency information, being either:

  o The average frequency, or
  o A probability map of considered frequency range,

- Associated observations:

  o Previous observations which were already assigned to the current interference source.

The aforesaid "current observations" can consist in step I2 of:

- the position of the observing device (the aforesaid interference analysis device),
- the received interference power, and
- the observed frequency channel index.

Indeed, the interference analysis device scans a given frequency band over a plurality of radiofrequency channels (for example sixteen channels in the examples of the figures commented below), each channel having its proper index.

Then, step S1 comprises a membership computation. Using the database of interference sources, the likelihood of the current observations for each source is computed based on a Bayesian Inference. The calculation measures:

- a similarity degree between a level of power given by the observation and a closest level of power of a source, given by a position of this source in the database; and

- and a similarity degree between the frequency observation and the source's frequency database.

This probability reflects how strong the connection between an observation and a source is.

Then, step S2 comprises observation classification. Using the probability calculated in the previous step, step S1, the observation is assigned to a source. This step S2 can be performed according to several embodiments:

- a "hard decision" embodiment where the assigned source is decided to be the one with highest probability, the decision being made once,
- a "source sampling" embodiment where the source decision is sampled based on its estimated probability. This technique requires iterations to enable the samples to converge to the estimated probability.
- A "hybrid method" embodiment where both the aforementioned methods are adopted, so as to balance the speed of the hard decision method and the stability of the source sampling method. Typically, a threshold of probability can be defined, above which the hard decision can be taken and below which the source sampling is rather used.

Then, step S3 comprises the database update. Once the observation is associated to a source, the database of this source evolves according to the observation and is updated thus accordingly.

Finally, in step O1, the newly updated database can be used in a next iteration of the process.

The details for each step of the general method are described below.

In the interfered radio environment, it is assumed that the interference is generated by one or several radio sources. One source distinguishes to another by its geometrical position and/or its operating frequency band.

To be able to monitor the environment, the observation of interference is required. To that end, the observations can be obtained by any of the following devices:

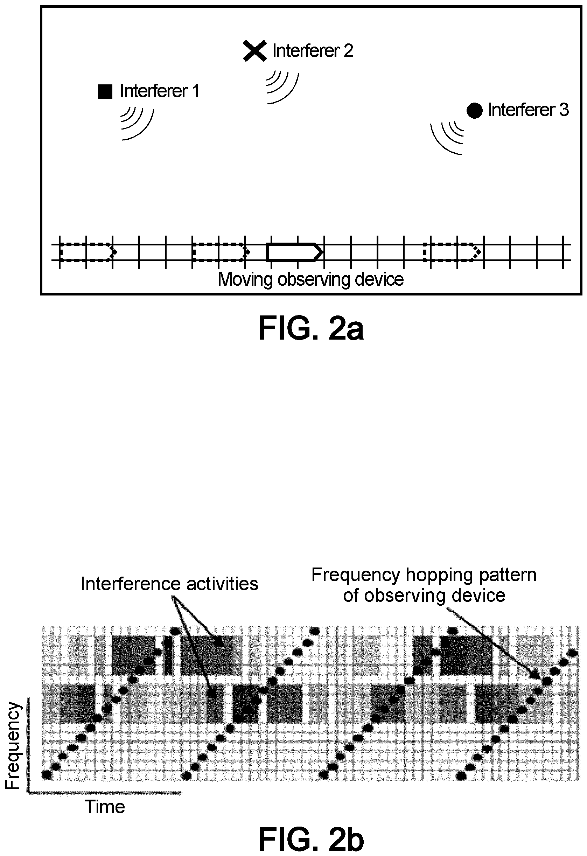

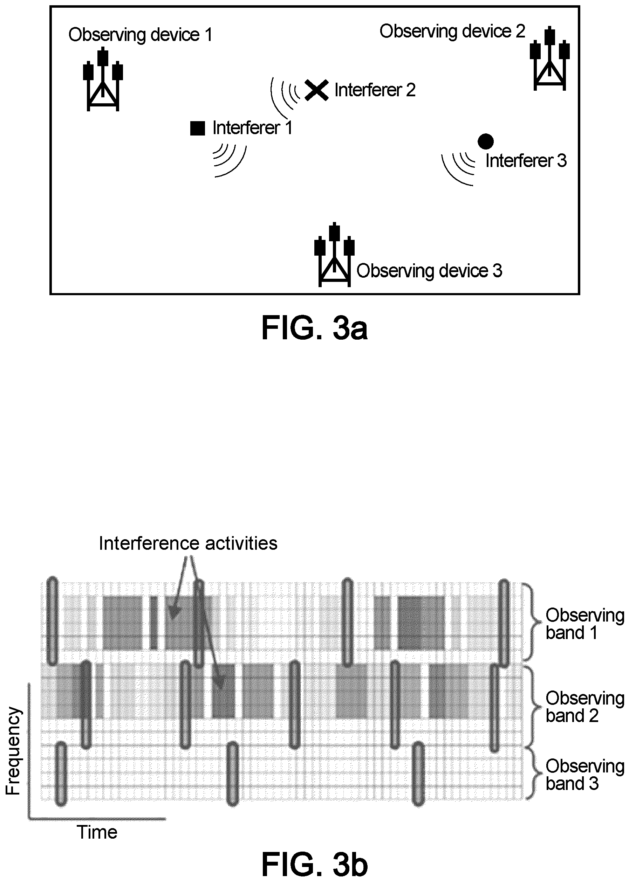

- One device with the capability of observing in multiple frequencies and in multiple locations: this device can be a wideband transceiver or a frequency-hoping transceiver, mounted on a moving vehicle (train, or car, or boat, etc.). An example for this setting is illustrated in figure 2a showing the change in the spatial domain, and in figure 2b showing the change in the frequency domain;
- Or multiple devices with multiple operating frequency (possibly a wideband transceiver or a frequency-hoping transceiver): these devices are located in at least three non-aligned positions to enable the triangulation in geolocation. More than three positions are preferable to enhance the accuracy. An example of arrangement of devices in space and in frequency is shown respectively in Figures 3a and 3b.

For the observing device, since there does not exist any signalling exchange with interference sources, the interference transmission is completely random. In other words, the device blindly observes the interference without knowing the interference location. Therefore, the observation data can be seen as a mixed signal.

Hereafter the following notations are adopted:

- Concerning an interference source $S_k$:

  o k is the source's index
  o $\theta_k$ is the source's position
  o $\phi_k$ is the source's operating frequency

- Concerning an observation $Z_n$:

  o n is the index of observation
  o $T_n$ is the position of observing device
  o $W_n$ is the received interference power
  o $F_n$ is the observed frequency.

For the estimation of the received power, it is assumed at the moment the observation $Z_n$ is obtained, that the interference source $S_k$ is emitting. The received power (in dB for example) at the observing device can be modelled as

$$W_n = a + b\log\|T_n - \theta_k\| + \vartheta_{n,k},$$

where a and b are two coefficients of path-loss model and $\vartheta_{n,k}$ takes into account a possible shadowing. The shadowing follows the multivariate Gaussian distribution with the correlation between two vehicles' positions $T_n$ and $T_m$ (such as two trains' positions for instance) being expressed as :

$$\rho = \rho_0 e^{-\frac{\|T_n - T_m\|}{d_c}}$$

where $\rho_0$, $d_c$ are two coefficients of shadowing model.

The operating frequency of the interference source $S_k$ can be modelled by two parameters:

$$\phi_k = (f_k, B_k),$$

where $f_k$ denotes the starting frequency and $B_k$ denotes the band width.

To be able to analyse the interference, it is needed to classify the observations into separated sources. A database for each source then can be built and updated according to its belonged observations. This database afterward serves the next observation classification as a prior knowledge.

Hereafter, $V_n$ denotes the latent variable which indicates the source that the observation $Z_n$ is assigned to. At the beginning of the analysis of observation $Z_n$, the following statements are assumed:

- $(.)_{-n}$ denotes the existing set of a variable before having the observation $Z_n$
- There exists $K$ interference sources: $k = 1..K$
- For a source $S_k$, $Z_{-n}^{(k)}$ denotes the assigned observations
- The database of source position is available under the form of probability as follows

$$p\left(\theta_k \middle| Z_{-n}^{(k)}\right)$$

- The database of source operating frequency is available under the form of probability as follows

$$p\left(\phi_k \middle| Z_{-n}^{(k)}\right)$$

The membership computation of step S1 can be based either on:

a) Euclidean distance :

Given the average position $\overline{\theta}_k$ and average frequency $\overline{\phi}_k$, the membership computation can be performed by the Euclidean distance between the observation and the interference source. In the spatial domain, the distance is proposed to be computed as follows

$$d_S(n,k) \ = \ |W_n \ - \ a + b log \| T_n - \overline{\theta}_k \| |,$$

and the distance in the frequency domain is proposed to be computed as follows

$$d_F(n,k) \ = \ |F_n \ - \ \overline{\phi}_k|,$$

b) Bayesian inference :

In another approach, the membership computation can be proposed to be computed as corresponding to the probability that the observation can be a part of a source. Hereafter is denoted the latent variable $V_n$, corresponding to the time instant n, to indicate which source the observation belongs to. For an observation $Z_n = (T_n, W_n, F_n)$, the following probability can be considered

$$p(V_n|Z_n, Z_{-n}, V_{-n}) = \frac{p(Z_n|V_n, Z_{-n}, V_{-n}) \cdot p(V_n|Z_{-n}, V_{-n})}{p(Z_n|Z_{-n}, V_{-n})}$$

Since an interference source is independent to others, the likelihood probability $p(Z_n|V_n, Z_{-n}, V_{-n})$ can be detailed for all possible values of $V_n$ as

$$p(Z_n|V_n, Z_{-n}, V_{-n}) = \int_{\theta_{V_n}, \phi_{V_n}} p\left(Z_n \middle| V_n, Z_{-n}^{(V_n)}, \theta_{V_n}, \phi_{V_n}\right) p\left(\theta_{V_n} \middle| Z_{-n}^{(V_n)}\right) p\left(\phi_{V_n} \middle| Z_{-n}^{(V_n)}\right).$$

Due to the fact that the power observation $W_n$ is a function of distance between the device and the interferer, it has no connection with the frequency observation $F_n$ which simply depends on the setting of the device. The probability in previous equation can be thus rewritten as:

$$p(Z_n | V_n, Z_{-n}, V_{-n})$$

$$= \int_{\theta_{V_n}} p\left(W_n \Big| V_n, W_{-n}^{(V_n)}, \theta_{V_n}\right) p\left(\theta_{V_n} \Big| Z_{-n}^{(V_n)}\right) \int_{\theta_{V_n}} p\left(F_n \Big| V_n, F_{-n}^{(V_n)}, \theta_{V_n}\right) p\left(\theta_{V_n} \Big| Z_{-n}^{(V_n)}\right).$$

As mentioned above, the power observation (in dB for instance) follows the gaussian distribution. Therefore the probability $p(W_n^{(V_n)} | W_{-n}^{(V_n)}, \theta_{V_n})$ can be expressed as:

$$p\left(W_n^{(V_n)} | W_{-n}^{(V_n)}, \theta_{V_n}\right) = \frac{1}{\sqrt{2\pi \sigma_{n|-n}^{(V_n)\,2}}} e^{-\frac{\left(W_n - \mu_{n|-n}^{(V_n)}\right)^2}{2\sigma_{n|-n}^{(V_n)\,2}}}$$

In this expression, the terms $\mu_{n|-n}^{(V_n)}$ and $\sigma_{n|-n}^{(V_n)}$ can be calculated as follows:

$$\begin{cases} \mu_{n|-n}^{(V_n)} = \mu_n^{(V_n)} + \Sigma_{n|-n}^{(V_n)} \Sigma_{-n}^{(V_n)^{-1}} (W_{-n}^{(V_n)} - \mu_{-n}^{(V_n)}) \\ \sigma_{n|-n}^{(V_n)\,2} = \sigma^2 - \Sigma_{n|-n}^{(V_n)} \Sigma_{-n}^{(V_n)^{-1}} \Sigma_{-n|n}^{(V_n)} \end{cases},$$

where:

- $\mu_n^{(V_n)}$ denotes a mean in a gaussian distribution for the observation $W_n$, and expressed as $\mu_n^{(V_n)} = a + b\log\|T_n - \theta_{V_n}\|$

- $\Sigma_{n|-n}^{(V_n)}$ denotes a correlation matrix between observation n and the other observation than n of source $V_n$,

- $\Sigma_{-n}^{(V_n)}$ denotes an auto-correlation matrix of observations other than $n$ of source $V_n$,

- $\mu_{-n}^{(V_n)}$ denotes the mean at observations other than n of source $V_n$,

- $\Sigma_{-n|n}^{(V_n)}$ denotes the correlation matrix between observations other than n and observation n of source $V_n$.

The probability in frequency observation can be divided into two terms $p_1$, and $p_2$ as $p\left(F_n \Big| F_{-n}^{(k)}, \phi_k\right) = p_1(F_n, \phi_k) \cdot p_2(F_n, \phi_k)$. The design of $p_1$, and $p_2$ can be proposed as follows:

- $p_1$ to indicate whether $F_n$ is inside $\phi_k$

$$p_1 = \begin{cases} 1 & \text{if } \left(F_0^{(k)} - f_n\right)\left(F_0^{(k)} + B^{(k)} - 1 - f_n\right) \leq 0 \\ 0 & \text{if } \left(F_0^{(k)} - f_n\right)\left(F_0^{(k)} + B^{(k)} - 1 - f_n\right) > 0 \end{cases}$$

- $p_2$ to determine how the fit is between the set of assigned frequencies $F_{-n}^{(k)}$, together with $F_n$ and $\phi_k$. The better they fit, the bigger $p_2$ is. This term can be proposed as

$$p_2 = \alpha \frac{|\{F_n, F_{-n}\} \cap \phi_k|}{|\{F_n, F_{-n}\} \cup \phi_k|},$$

where $\alpha$ is a normalizing coefficient which makes the probability sum to one.

Then, for the implementation of step S2, the observation classification can be based then either on:

a) Euclidean distance

The observation is classified by a hard decision according to its distance to the sources. In this sense, the observation is associated to the source with smallest distance, such as:

$$V_n = \underset{k}{\operatorname{argmin}}(d_S(n, k) + d_K(n, k))$$

b) Bayesian inference

The observation classification can be derived by one of the following methods:

o Hard decision:
The decision is made once according to the best membership probability

$$V_n = \underset{V_n}{\operatorname{argmax}} p(V_n|Z_n, Z_{-n}, V_{-n})$$

o Sampling method:
A random sample of $V_n$ is drawn according to the membership probability $p(V_n|Z_n, Z_{-n}, V_{-n})$. This approach requires iterations over the sampling which allow then the value of $V_n$ to converge.
∘ Hybrid approach:

In order to adopt the advantage of two both aforementioned methods, the rapidity of the "hard decision" method and the stability of the sampling method, a hybrid approach is proposed below.
First, the membership probability is normalized as follows

$$\bar{p}(V_n|Z_n, Z_{-n}, V_{-n}) = \frac{p(V_n|Z_n, Z_{-n}, V_{-n})}{\sum_k p(V_n = k|Z_n, Z_{-n}, V_{-n})}$$

Second, a threshold for the normalized membership probability is defined. In the present case, the best normalized membership probability falls above this threshold, and it can be stated that the best source for the observation is evident, so that the hard decision method can be implemented. For the other cases, the best source is ambiguous, thus the sampling method should rather be implemented.
The database update of step S3 can be based either on:

a) Euclidean distance

Supposing that the observation $Z_n$ is associated to the source k, then the average position and frequency can be updated as follows:

$$\begin{cases} \overline{\theta}_k = \underset{\theta_k}{\mathrm{argmin}} \sum_{n \, in \, source \, k} d_S(n,k) \\ \overline{\phi}_k = \underset{\phi_k}{\mathrm{argmin}} \sum_{n \, in \, source \, k} d_F(n,k) \end{cases}$$

b) Bayesian inference

For the geolocation database, the following probability is computed for the update:

$$p\left(\theta_k \middle| W_{-n}^{(k)}, W_n^{(k)}\right) = \frac{p\left(W_n^{(k)} \middle| Z_{-n}^{(k)}, \theta_k\right) p(\theta_k | W_{-n}^{(k)})}{P\left(W_n^{(k)} \middle| W_{-n}^{(k)}\right)}$$

For the frequency database, the following probability is computed for the update

$$p\left(\phi_k \middle| F_n^{(k)}, F_{-n}^{(k)}\right) = \frac{p\left(F_n^{(k)} \middle| F_{-n}^{(k)}, \phi_k\right) p(\phi_k | F_{-n}^{(k)})}{p\left(F_n^{(k)} \middle| F_{-n}^{(k)}\right)}$$

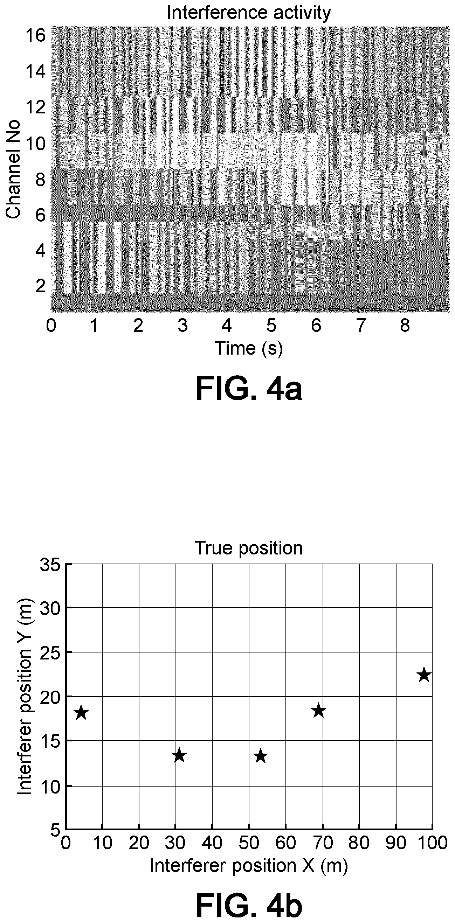

Figures 4a and 4b show an example of an interference environment. The interference activities in the frequency domain is depicted in Figure 4a and the respective geographical positions of interferers are shown in Figure 4b.

In this interfering environment, a moving device observes the interference environment via a frequency hopping (FH) pattern, as presented typically in figure 2b for instance. Details of such interference observations can be obtained for example from document EP-3716506.

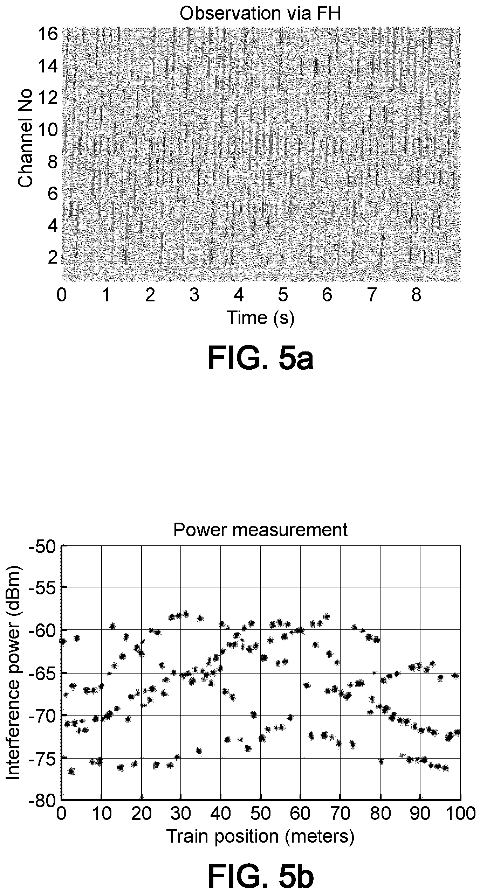

The initial corresponding observations obtained on the moving device are showed in figure 5a (in the frequency domain) and in figure 5b (in the spatial domain).

To analyse the environment, the Bayesian inference is used for the membership computation and the hard decision is used for the classification, in this example. The estimation is performed from scratch without any initial database.

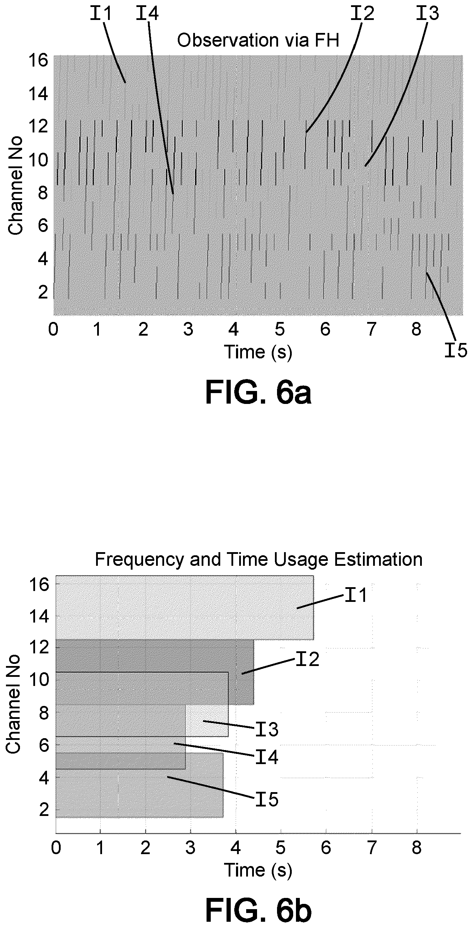

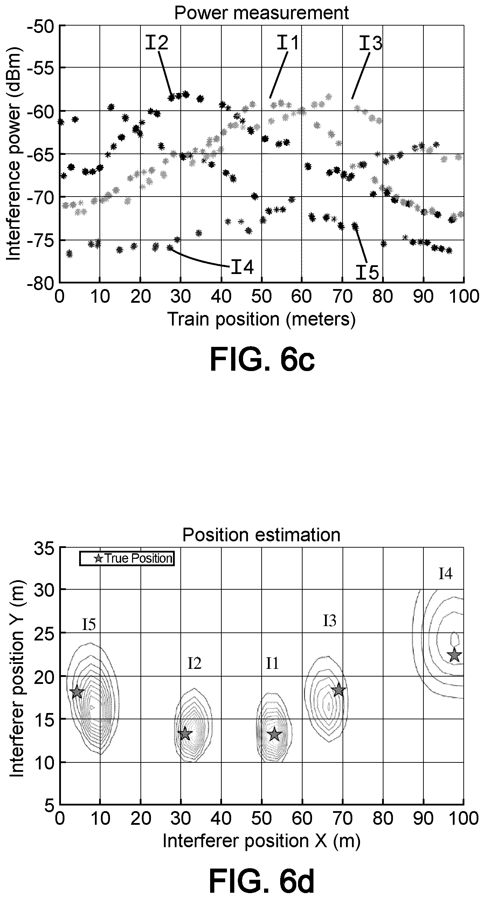

The result of observation classification is showed in Figure 6a and Figure 6c in the frequency domain and received power domain, respectively. In both figures, each label I1, I2, I3, I4 and I5 represents an interference source. As it can be seen, the method implementation makes it possible to estimate five interference sources and attribute the observations to each one of them. In Figure 6b, the estimation of operation frequency and activation time are plotted for each interference source. In Figure 6d, the contours of probability for the source's position resulted from the Bayesian update, are displayed along with the true position of the interference sources.

Therefore, the present disclosure allows the usage of a frequency hopping system, for instance in 2.4GHz ISM band, for characterizing the interference along a predefined trajectory such as a railroad, thereby making it possible to reduce the impact of such interference for railways equipment and/or communicating devices embarked in a train.

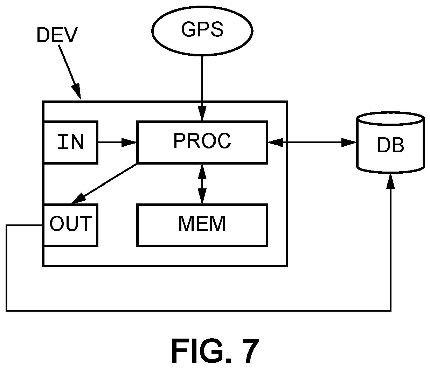

With reference to figure 7, a device DEV for implementing the method above can comprise for example:

- An input interface IN (such as for example a radiofrequency antenna) to receive radiofrequency signals and measure radiofrequency power in each frequency channel according to a frequency hopping pattern as presented in figure 2b for instance,
- A memory MEM to store at least instructions of a computer program to implement the method presented above, and possibly also to store data of the database DB used in the method,
- A processor PROC accessing to said memory MEM and database DB so as to implement the method and finally determine current interference sources (positions and radiofrequency active bands),
- An output interface OUT to deliver data of such a determination, that can feed the database DB so as to update its content,
- And optionally in an embodiment where the device DEV is mobile, a GPS chip to determine the exact location of the device at each of its observations.

**Claims**

1. A method for characterizing radiofrequency interference caused by a plurality of sources, comprising:

   - using at least one observing device scanning successively a plurality of radiofrequency bands for performing interference measurements (I2) in said plurality of radiofrequency bands, in different space locations, and at different time instants, and providing observations at successive time instants of:

     * a current observing frequency,
     * a current position of the observing device, and
     * a received interference power in an observed frequency band,

   - computing (S1), for each interference source and each observation, a likelihood probability to attribute one observation to one interference source,
   - using said likelihood probability computations to assign (S2) each of said observations to one interference source,
   - for each interference source assigned with one of said observations, estimating a location and a frequency occupation of said interference source,

   Wherein said likelihood probability computing (S1) is based on both frequency observation and interference power observation.

2. The method of claim 1, wherein said likelihood probability computation uses a database storing, for each source of said interference sources, at least data of the estimated location of said source and data of occupation of at least two radiofrequency bands by said source.

3. The method of claim 2, wherein said database is updated after each assignation (S2) of an observation to one interference source, in view of a next iteration of the method.

4. The method according to anyone of claims 2 and 3, wherein, for each interference source, said database provides at least one of:

   - an average past position, and
   - a probability map of a discretized past position.

5. The method according to anyone of claims 2 to 4, wherein, for each interference source, said database provides at least one of:

   - an average radiofrequency band past occupation, and
   - probability map of radiofrequency range past occupation.

6. The method according to anyone of claims 2 to 5, wherein said database stores, for each interference source, data of occurrences of previous observations which were already assigned to said interference source.

7. The method according to anyone of claims 2 to 6, wherein, for a current observation, the likelihood probability of one of the interference sources to be related to said current observation is computed (S1) on the basis of a comparison between data of said database and data of said given observation, and wherein said comparison comprises a determination of:

   - a similarity degree between a level of radiofrequency power measured in the current observation and a closest level of radiofrequency power corresponding to a source, given by a past position of this source in said database and a current position of the observing device; and
   - and a similarity degree between a radiofrequency band which is occupied in the current observation and a radiofrequency band which was occupied by a source according to said database.

8. The method according to anyone of the preceding claims, wherein the assignation (S2) of at least one observation to one interference source comprises:

- sorting the likelihood probabilities computed for each interference source to attribute said at least one observation to said interference source,
- selecting the highest computed likelihood probability to assign said at least one observation to the interference source having the highest computed likelihood probability.

9. The method of claim 8, wherein the likelihood probabilities are computed on the basis of Euclidean distance calculations of:

- a distance between the observing device and a source, in a radiofrequency power domain, and
- a distance between a frequency band occupied by said source according to the database, and a frequency band where interference is measured according to said observation.

10. The method according to anyone of the preceding claims, wherein the assignation (S2) of at least one observation to one interference source comprises:

- sampling each source assignation based on a related computed likelihood probability, with an initial random draw followed by calculation iterations until successive samples converge to said related computed likelihood probability.

11. The method according to claim 10, wherein each likelihood probability is compared to a threshold and:

- if the computed likelihood probability is above said threshold, then the highest computed likelihood probability is selected to assign said at least one observation to the interference source having the highest computed likelihood probability,
- if the computed likelihood probability is below said threshold, then the source assignation is sampled until convergence.

12. The method according to anyone of the preceding claims, wherein said observing device moves in successive known positions while said interference sources are assumed to be in fixed positions.

13. The method according to anyone of claims 1 to 11, wherein said scanning of plurality of radiofrequency bands is performed by at least three observing devices having known spatial positions, said spatial positions being not aligned, and wherein sources positions determination is performed by triangulation over the three observing devices.

14. The method according to anyone of the preceding claims, wherein said likelihood probability computing (S1) involves a joint Bayesian inference of frequency observation and interference power observation.

15. An observing device comprising a computer circuit to perform steps of the method as claimed in anyone of the preceding claims, including at least:

- receiving observations at successive time instants,
- computing (S1), for each interference source and each observation, a likelihood probability to attribute one observation to one interference source,
- using said likelihood probability computations to assign (S2) each of said observations to one interference source, and
- for each interference source assigned with one of said observations, estimating a location and a frequency occupation of said interference source.

16. A system comprising at least three observing devices according to claim 15 for performing the method as claimed in claim 13.

17. A computer program comprising instructions which, when the program is executed by a computer, cause the computer to carry out steps of the method according to anyone of claims 1 to 14, including at least:

- receiving observations at successive time instants,
- computing (S1), for each interference source and each observation, a likelihood probability to attribute one observation to one interference source,
- using said likelihood probability computations to assign (S2) each of said observations to one interference source, and
- for each interference source assigned with one of said observations, estimating a location and a frequency occupation of said interference source.

**Patentansprüche**

1. Verfahren zum Charakterisieren einer durch eine Mehrzahl von Quellen verursachten Hochfrequenzstörung, umfassend:

   - Verwenden wenigstens einer Überwachungsvorrichtung, welche aufeinanderfolgend eine Mehrzahl von Hochfrequenzbändern scannt, zum Durchführen von Störungsmessungen (I2) in der Mehrzahl von Hochfrequenzbändern an verschiedenen räumlichen Orten und zu verschiedenen Zeitpunkten und Bereitstellen von Überwachungen zu aufeinanderfolgenden Zeitpunkten, von:

      * einer aktuellen Überwachungsfrequenz,
      * einer aktuellen Position der Überwachungsvorrichtung und
      * einer empfangenen Störleistung in einem überwachten Frequenzband,

   - Berechnen (S1), für jede Störquelle und jede Überwachung, einer Wahrscheinlichkeit, eine Überwachung einer Störquelle zuzuordnen,
   - Verwenden der Wahrscheinlichkeitsberechnungen, um jede der Überwachungen einer Störquelle zuzuweisen (S2),
   - für jede Störquelle, welche einer der Überwachungen zugewiesen ist, Schätzen eines Orts und einer Frequenzbelegung der Störquelle,

   wobei das Wahrscheinlichkeitsberechnen (S1) sowohl auf einer Frequenzüberwachung als auch auf einer Störleistungsüberwachung basiert.

2. Verfahren nach Anspruch 1, wobei die Wahrscheinlichkeitsberechnung eine Datenbank verwendet, welche, für jede Quelle der Störquellen, wenigstens Daten des geschätzten Orts der Quelle und Daten einer Belegung von wenigstens zwei Hochfrequenzbändern durch die Quelle speichert.

3. Verfahren nach Anspruch 2, wobei die Datenbank nach jeder Zuweisung (S2) einer Überwachung zu einer Störquelle im Hinblick auf eine nächste Iteration des Verfahrens aktualisiert wird.

4. Verfahren nach einem der Ansprüche 2 und 3, wobei, für jede Störquelle, die Datenbank wenigstens eines bereitstellt, aus:

   - einer durchschnittlichen früheren Position und
   - einer Wahrscheinlichkeitsdarstellung einer diskreten früheren Position.

5. Verfahren nach einem der Ansprüche 2 bis 4, wobei, für jede Störquelle, die Datenbank wenigstens eines bereitstellt, aus:

   - einer durchschnittlichen früheren Belegung eines Hochfrequenzbands und
   - einer Wahrscheinlichkeitsdarstellung einer früheren Belegung eines Hochfrequenzbereichs.

6. Verfahren nach einem der Ansprüche 2 bis 5, wobei die Datenbank, für jede Störquelle, Daten von Vorkommnissen vorheriger Überwachungen speichert, welche bereits der Störquelle zugewiesen worden sind.

7. Verfahren nach einem der Ansprüche 2 bis 6, wobei, für eine aktuelle Überwachung, die Wahrscheinlichkeit, dass eine der Störquellen mit der aktuellen Überwachung im Zusammenhang steht, auf der Grundlage eines Vergleichs zwischen Daten der Datenbank und Daten der gegebenen Überwachung berechnet wird (S1) und wobei der Vergleich eine Bestimmung umfasst, von:

   - einem Ähnlichkeitsgrad zwischen einem Niveau einer in der aktuellen Überwachung gemessenen Hochfrequenzleistung und einem nächsten Niveau einer Hochfrequenzleistung, welche einer Quelle entspricht, gegeben durch eine frühere Position dieser Quelle in der Datenbank und eine aktuelle Position der Überwachungsvorrichtung; und

- einem Ähnlichkeitsgrad zwischen einem Hochfrequenzband, welches in der aktuellen Überwachung belegt ist, und einem Hochfrequenzband, welches gemäß der Datenbank durch eine Quelle belegt war.

8. Verfahren nach einem der vorhergehenden Ansprüche, wobei die Zuweisung (S2) wenigstens einer Überwachung zu einer Störquelle umfasst:

- Sortieren der für jede Störquelle berechneten Wahrscheinlichkeiten, um die wenigstens eine Überwachung der Störquelle zuzuordnen,
- Auswählen der höchsten berechneten Wahrscheinlichkeit, um die wenigstens eine Überwachung der Störquelle zuzuordnen, welche die höchste berechnete Wahrscheinlichkeit aufweist.

9. Verfahren nach Anspruch 8, wobei die Wahrscheinlichkeiten auf der Grundlage von Berechnungen einer euklidischen Entfernung berechnet werden, aus:

- einer Entfernung zwischen der Überwachungsvorrichtung und einer Quelle in einer Hochfrequenzleistungsdomain und
- einer Entfernung zwischen einem gemäß der Datenbank durch die Quelle belegten Frequenzband und einem Frequenzband, in welchem gemäß der Überwachung eine Störung gemessen wird.

10. Verfahren nach einem der vorhergehenden Ansprüche, wobei die Zuweisung (S2) wenigstens einer Überwachung zu einer Störquelle umfasst:

- Abtasten jeder Quellenzuordnung auf Grundlage einer im Zusammenhang stehenden berechneten Wahrscheinlichkeit, mit einer anfänglichen zufälligen Ziehung, gefolgt von Berechnungsiterationen, bis aufeinanderfolgende Stichproben mit der im Zusammenhang stehenden berechneten Wahrscheinlichkeit konvergieren.

11. Verfahren nach Anspruch 10, wobei jede Wahrscheinlichkeit mit einem Schwellenwert verglichen wird und:

- wenn die berechnete Wahrscheinlichkeit über dem Schwellenwert liegt, die höchste berechnete Wahrscheinlichkeit ausgewählt wird, um die wenigstens eine Überwachung der Störquelle zuzuweisen, welche die höchste berechnete Wahrscheinlichkeit aufweist,
- wenn die berechnete Wahrscheinlichkeit unter dem Schwellenwert liegt, die Quellenzuweisung bis zu einer Konvergenz abgetastet wird.

12. Verfahren nach einem der vorhergehenden Ansprüche, wobei sich die Überwachungsvorrichtung in aufeinanderfolgende bekannte Positionen bewegt, während angenommen wird, dass sich die Störquellen in festen Positionen befinden.

13. Verfahren nach einem der Ansprüche 1 bis 11, wobei das Scannen einer Mehrzahl von Hochfrequenzbändern durch wenigstens drei Überwachungsvorrichtungen durchgeführt wird, welche bekannte räumliche Positionen haben, wobei die räumlichen Positionen nicht ausgerichtet sind, und wobei eine Quellenpositionsbestimmung durch eine Triangulation über die drei Überwachungsvorrichtungen durchgeführt wird.

14. Verfahren nach einem der vorhergehenden Ansprüche, wobei die Wahrscheinlichkeitsberechnung (S1) eine gemeinsame Bayessche Inferenz einer Frequenzüberwachung und einer Störleistungsüberwachung involviert.

15. Überwachungsvorrichtung, umfassend eine Computerschaltung zum Durchführen des wie in einem der vorhergehenden Ansprüche beanspruchten Verfahrens, welches wenigstens umfasst:

- Empfangen von Überwachungen zu aufeinanderfolgenden Zeitpunkten,
- Berechnen (S1), für jede Störquelle und jede Überwachung, einer Wahrscheinlichkeit, eine Überwachung einer Störquelle zuzuordnen,
- Verwenden der Wahrscheinlichkeitsberechnungen, um jede der Überwachungen einer Störquelle zuzuweisen (S2), und
- für jede Störquelle, welche einer der Überwachungen zugewiesen ist, Schätzen eines Orts und einer Frequenzbelegung der Störquelle.

16. System, umfassend wenigstens drei Überwachungsvorrichtungen nach Anspruch 15 zum Durchführen des wie in Anspruch 13 beanspruchten Verfahrens.

17. Computerprogramm, umfassend Anweisungen, welche, wenn das Programm durch einen Computer ausgeführt wird, den Computer veranlassen, Schritte des Verfahrens nach einem der Ansprüche 1 bis 14 auszuführen, welches wenigstens umfasst:

- Empfangen von Überwachungen zu aufeinanderfolgenden Zeitpunkten,
- Berechnen (S1), für jede Störquelle und jede Überwachung, einer Wahrscheinlichkeit, eine Überwachung einer Störquelle zuzuordnen,
- Verwenden der Wahrscheinlichkeitsberechnungen, um jede der Überwachungen einer Störquelle zuzuweisen (S2), und
- für jede Störquelle, welche einer der Überwachungen zugewiesen ist, Schätzen eines Orts und einer Frequenzbelegung der Störquelle.

## Revendications

1. Procédé de caractérisation d'une interférence radiofréquence provoquée par une pluralité de sources, comprenant :

- l'utilisation d'au moins un dispositif d'observation balayant successivement une pluralité de bandes radiofréquence pour réaliser des mesures d'interférence (I2) dans ladite pluralité de bandes radiofréquence, dans différents emplacements spatiaux, et à différents instants temporels, et la fourniture d'observations à des instants temporels successifs :

* d'une fréquence d'observation actuelle,
* d'une position actuelle du dispositif d'observation, et
* d'une puissance d'interférence reçue dans une bande de fréquences observée,

- le calcul (S1), pour chaque source d'interférence et chaque observation, d'une probabilité de vraisemblance pour attribuer une observation à une source d'interférence,
- l'utilisation desdits calculs de probabilité de vraisemblance pour attribuer (S2) chacune desdites observations à une source d'interférence,
- pour chaque source d'interférence à laquelle est attribuée une desdites observations, l'estimation d'un emplacement et d'une occupation de fréquence de ladite source d'interférence,

dans lequel ledit calcul de probabilité de vraisemblance (S1) est basé à la fois sur l'observation de fréquence et sur l'observation de puissance d'interférence.

2. Procédé selon la revendication 1, dans lequel ledit calcul de probabilité de vraisemblance utilise une base de données stockant, pour chaque source desdites sources d'interférence, au moins des données de l'emplacement estimé de ladite source et des données d'occupation d'au moins deux bandes radiofréquence par ladite source.

3. Procédé selon la revendication 2, dans lequel ladite base de données est mise à jour après chaque attribution (S2) d'une observation à une source d'interférence, en vue d'une prochaine itération du procédé.

4. Procédé selon l'une quelconque des revendications 2 et 3, dans lequel, pour chaque source d'interférence, ladite base de données fournit au moins une parmi :

- une position passée moyenne, et
- une carte de probabilité d'une position passée discrétisée.

5. Procédé selon l'une quelconque des revendications 2 à 4, dans lequel, pour chaque source d'interférence, ladite base de données fournit au moins une parmi :

- une occupation passée de bande radiofréquence moyenne, et
- une carte de probabilité d'occupation passée de bande radiofréquence.

**6.** Procédé selon l'une quelconque des revendications 2 à 5, dans lequel ladite base de données stocke, pour chaque source d'interférence, des données de survenances d'observations précédentes qui ont déjà été attribuées à ladite source d'interférence.

**7.** Procédé selon l'une quelconque des revendications 2 à 6, dans lequel, pour une observation actuelle, la probabilité de vraisemblance d'une des sources d'interférence à associer à ladite observation actuelle est calculée (S1) sur la base d'une comparaison entre des données de ladite base de données et des données de ladite observation donnée, et dans lequel ladite comparaison comprend une détermination :

- d'un degré de similarité entre un niveau de puissance radiofréquence mesurée dans l'observation actuelle et un plus proche niveau de puissance radiofréquence correspondant à une source, donné par une position passée de cette source dans ladite base de données et une position actuelle du dispositif d'observation ; et
- d'un degré de similarité entre une bande radiofréquence qui est occupée dans l'observation actuelle et une bande radiofréquence qui était occupée par une source selon ladite base de données.

**8.** Procédé selon l'une quelconque des revendications précédentes, dans lequel l'attribution (S2) d'au moins une observation à une source d'interférence comprend :

- le tri des probabilités de vraisemblance calculées pour chaque source d'interférence pour attribuer ladite au moins une observation à ladite source d'interférence,
- la sélection de la plus haute probabilité de vraisemblance calculée pour attribuer ladite au moins une observation à la source d'interférence ayant la plus haute probabilité de vraisemblance calculée.

**9.** Procédé selon la revendication 8, dans lequel les probabilités de vraisemblance sont calculées sur la base de calculs de distance euclidienne :

- d'une distance entre le dispositif d'observation et une source, dans un domaine de puissance radiofréquence, et
- d'une distance entre une bande de fréquences occupée par ladite source selon la base de données et une bande de fréquences où une interférence est mesurée selon ladite observation.

**10.** Procédé selon l'une quelconque des revendications précédentes, dans lequel l'attribution (S2) d'au moins une observation à une source d'interférence comprend :

- l'échantillonnage de chaque attribution de source sur la base d'une probabilité de vraisemblance calculée relative, avec un tirage aléatoire initial suivi d'itérations de calcul jusqu'à ce que des échantillons successifs convergent vers ladite probabilité de vraisemblance calculée relative.

**11.** Procédé selon la revendication 10, dans lequel chaque probabilité de vraisemblance est comparée à un seuil et :

- si la probabilité de vraisemblance calculée est supérieure audit seuil, alors la plus haute probabilité de vraisemblance calculée est sélectionnée pour attribuer ladite au moins une observation à la source d'interférence ayant la plus haute probabilité de vraisemblance calculée,
- si la probabilité de vraisemblance calculée est inférieure audit seuil, alors l'attribution de source est échantillonnée jusqu'à une convergence.

**12.** Procédé selon l'une quelconque des revendications précédentes, dans lequel ledit dispositif d'observation se déplace dans des positions connues successives alors que lesdites sources d'interférence sont supposées être dans des positions fixes.

**13.** Procédé selon l'une quelconque des revendications 1 à 11, dans lequel ledit balayage d'une pluralité de bandes radiofréquence est réalisé par au moins trois dispositifs d'observation ayant des positions spatiales connues, lesdites positions spatiales n'étant pas alignées, et dans lequel une détermination de positions de sources est réalisée par triangulation sur les trois dispositifs d'observation.

**14.** Procédé selon l'une quelconque des revendications précédentes, dans lequel ledit calcul de probabilité de vraisemblance (S1) implique une inférence bayésienne conjointe d'observation de fréquence et d'observation de puissance d'interférence.

15. Dispositif d'observation comprenant un circuit d'ordinateur pour réaliser des étapes du procédé selon l'une quelconque des revendications précédentes, comportant au moins :

    - la réception d'observations à des instants temporels successifs,
    - le calcul (S1), pour chaque source d'interférence et chaque observation, d'une probabilité de vraisemblance pour attribuer une observation à une source d'interférence,
    - l'utilisation desdits calculs de probabilité de vraisemblance pour attribuer (S2) chacune desdites observations à une source d'interférence, et
    - pour chaque source d'interférence à laquelle est attribuée une desdites observations, l'estimation d'un emplacement et d'une occupation de fréquence de ladite source d'interférence.

16. Système comprenant au moins trois dispositifs d'observation selon la revendication 15 pour réaliser le procédé selon la revendication 13.

17. Programme d'ordinateur comprenant des instructions qui, quand le programme est exécuté par un ordinateur, amènent l'ordinateur à réaliser des étapes du procédé selon l'une quelconque des revendications 1 à 14, comportant au moins :

    - la réception d'observations à des instants temporels successifs,
    - le calcul (S1), pour chaque source d'interférence et chaque observation, d'une probabilité de vraisemblance pour attribuer une observation à une source d'interférence,
    - l'utilisation desdits calculs de probabilité de vraisemblance pour attribuer (S2) chacune desdites observations à une source d'interférence, et
    - pour chaque source d'interférence à laquelle est attribuée une desdites observations, l'estimation d'un emplacement et d'une occupation de fréquence de ladite source d'interférence.

**FIG. 1**

**FIG. 2a**

**FIG. 2b**

FIG. 3a

FIG. 3b

## Interference activity

## FIG. 4a

## True position

## FIG. 4b

Observation via FH

FIG. 5a

Power measurement

FIG. 5b

FIG. 6a

FIG. 6b

## Power measurement

**FIG. 6c**

## Position estimation

**FIG. 6d**

**FIG. 7**

**EP 4 236 117 B1**

**Patent documents cited in the description**

- US 2012045012 A
- US 2021384994 A
- EP 3716506 A